# EUROPEAN PATENT APPLICATION

(11) **EP 4 813 670 A1**
(43) Date of publication of application: **30.09.2026**
(21) Application number: 26167697.7
(22) Date of filing: 25.03.2026
(51) Int. Cl.: B60C 11/00, B60C 11/03

(54) **AIRCRAFT TYRE**

(30) Priority: 26.03.2025 GB 202504471
(71) Applicant: Airbus Operations Limited, Bristol BS34 7PA (GB)
(72) Inventor: WILLIAMS, David, Bristol, BS34 7PA (GB); KERR, Sean, Bristol, BS34 7PA (GB)
(74) Representative: EIP

(57) **Abstract**

Disclosed is an aircraft tyre comprising a circumferential surface, wherein the circumferential surface is centred on a rotation axis, is configured to roll along the ground in use about the rotation axis, and comprises at least one first area and at least one second area circumferentially offset from the at least one first area, the at least one first area and the at least one second area having different respective friction coefficients, measured in respective parallel directions that each have at least a component parallel to the rotation axis, with respect to a material of the ground.

## Description

### TECHNICAL FIELD

The present invention relates to an aircraft tyre and an aircraft landing gear comprising the aircraft tyre.

### BACKGROUND

Aircraft tyres must be capable of withstanding the loads associated with aircraft operation. The landing gear(s) on which they are installed must also be capable of withstanding loads that arise as a consequence of interactions between the tyre and ground. One such load is from the weight of the aircraft, experienced during ground-based maneuvering, such as during aircraft landing and taxiing on a runway. During taxiing, the aircraft tyre and the aircraft landing gear experience torsional loads along an axis of the landing gear, in particular during changes in direction of the aircraft during taxiing. It is desirable to make aircraft tyres that can manage and reduce such torsional loads into the landing gear, and that have acceptable braking performance. Presently, to ensure the loads in aircraft tyres are at a safe and acceptable level, careful maneuvering is undertaken by a pilot of the aircraft to avoid abrupt changes in the path and landing gears are large in size to cope with the high torsional loads, thereby leading to relatively heavy landing gears.

### SUMMARY

A first aspect of the present invention provides an aircraft tyre comprising a circumferential surface, wherein the circumferential surface is centred on a rotation axis, is configured to roll along the ground in use about the rotation axis, and comprises at least one first area and at least one second area circumferentially offset from the at least one first area, the at least one first area and the at least one second area having different respective friction coefficients, measured in respective parallel directions that each have at least a component parallel to the rotation axis, with respect to a material of the ground.

In such an aircraft tyre, a torsional load experienced by the aircraft tyre during taxiing may be relieved. Such relief of torsional load may be experienced during changes in direction of the aircraft during taxiing, when the aircraft tyre rolls along the ground and the circumferential surface is in contact with the ground. One of the first and the second areas of the circumferential surface, having a lower of the respective friction coefficients, permits the aircraft tyre to slide along the direction of the rotation axis to provide such relief. This in turn protects the aircraft tyre, and an aircraft landing gear comprising the aircraft tyre from high torsional loads and wear, prolonging lifespan and time between maintenance operations thereof and allowing for a reduced landing gear structural weight. For example, if the at least one first area has a friction coefficient of a conventional aircraft tyre, the at least one second area may have a friction coefficient that is lower such that the at least one second area, when in contact with the ground, will slip more easily and relieve a torsional load on the aircraft tyre and the aircraft landing gear.

Optionally, the at least one first area and the at least one second area of the circumferential surface comprise respective different material compounds. The at least one second area therefore has a different material composition than the at least one first area, wherein the different material composition has a different friction coefficient with respect to the ground than a material of the at least one first area. Tailoring the friction coefficient of the respective areas by tailoring a material composition thereof is a way to modify the friction coefficient of the respective areas throughout a lifespan of the aircraft tyre, compared to, for example surface texture or coating which may wear out over time in service.

Optionally, the at least one first area comprises plural first areas and the at least one second area comprises plural second areas, and wherein the plural first areas and the plural second areas alternate along the circumferential surface. As the aircraft tyre rolls along the ground, the friction coefficient with respect to the ground therefore alternates between a higher and a lower friction coefficient with respect to the ground. The aircraft tyre therefore may alternate between being able to slip along the ground in a direction of the rotation axis and not being able to do so. Therefore, torsional loads may be relieved without entirely losing control of a motion of the aircraft tyre, or overly impacting braking performance.

Optionally, the plural first areas are equally sized and the plural second areas are equally sized.

Optionally, a size of each of the plural first areas is greater than a size of each of the plural second areas. The first areas are therefore in contact with the ground for longer, at constant taxi speed, thus maintaining a level of control over the aircraft speed, i.e. allowing for braking. The second areas may in examples only be as large as necessary to allow the relief of torsional load, and no larger, to preserve braking performance and aircraft tyre traction outside of the relief of torsional load.

Optionally, the friction coefficient of the at least one first area is greater than the friction coefficient of the at least one second area.

Optionally, the at least one first area forms at least 50% of a surface area of the circumferential surface. The at least one first area may thus ensure the sufficient friction between the aircraft tyre and the ground is maintained for braking and anti-skid purposes. Conversely, in examples, up to 50% of the circumferential surface may be formed by the at least one second area, that permit the release of torsional load during the aircraft taxiing on the ground, without overly impacting the braking performance of the aircraft.

Optionally, the aircraft tyre has a contact patch in contact with the ground when resting on the ground, under a load of 25,000kg normal to the ground, the contact patch moving along the circumferential surface as the aircraft tyre revolves about the rotation axis when rolling on the ground, the contact patch having a width in a direction of the rotation axis, wherein the, or each of the, at least one second area of the circumferential surface extends in the direction of the rotation axis such that, in use, the, or each of the, at least one second area extends across an entirety of the width of the contact patch when comprised in the contact patch. Thus, the release of torsional load about an axis of the landing gear is not inhibited by a change of friction coefficient in a direction parallel to the rotation axis, with respect to the ground. Naturally, in some examples, the load could be other than 25,000kg, dependent on factors such as how much fuel the aircraft is carrying, how much cargo the aircraft is carrying, how many passengers the aircraft is carrying, the type of aircraft, and the like. In some examples, the load is another value, such as another value between 20,000kg and 30,000kg.

Optionally, the aircraft tyre has a contact area in contact with the ground when resting on the ground, under a load of 25,000kg normal to the ground, the contact area moving along the circumferential surface as the aircraft tyre revolves about the rotation axis when rolling on the ground, the contact area having a length in a circumferential direction, wherein the, or each of the, at least one second area of the circumferential surface extends in a circumferential direction such that, in use, the, or each of the, at least one second area extends along an entirety of the length of the contact patch when comprised in the contact patch. Thus, the release of torsional load in the circumferential direction is not inhibited by a change of friction coefficient with respect to the ground in the circumferential direction. In some examples, the load is another value, such as another value between 20,000kg and 30,000kg, for the reasons noted above.

A second aspect of the present invention provides an aircraft landing gear comprising the aircraft tyre according to the first aspect. The aircraft landing gear may be a bogie landing gear, such as for example four- or six-wheel bogie landing gear.

Optionally, the aircraft landing gear comprises a plurality of aircraft tyres, wherein at least one but less than all of the plurality of aircraft tyres is according to the first aspect.

By comprising at least one aircraft tyre that is not according to the first aspect, i.e. has a circumferential surface of uniform friction coefficient with respect to the material of the ground, the landing gear may have a balanced performance in both releasing the torsional loads and in braking during landing and taxiing.

Optionally, the aircraft landing gear comprises a plurality of aircraft tyres, and wherein each of at least two of the plurality of aircraft tyres is according to the first aspect, and the second area of a first of the at least two aircraft tyres is different in size and/or the at least one second area of the first of the at least two aircraft tyres has the friction coefficient, measured in the parallel direction that has at least a component parallel to the rotation axis, with respect to the material of the ground, that is different to the friction coefficient, measured in the parallel direction that has at least a component parallel to the rotation axis, with respect to the material of the ground of the at least one second area of a second of the at least two aircraft tyres.

Thus, each of the plurality of aircraft tyres of the aircraft landing gear may have properties specifically selected for a position of the respective aircraft tyre on the aircraft landing gear, depending on whether braking performance or relief of torsional loads or both is desired at each of the respective aircraft tyre positions on the landing gear.

A third aspect of the present invention provides an aircraft comprising the landing gear according to the second aspect.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft having main landing gears comprising an aircraft tyre according to an example of the present invention;
Figure 2 shows a schematic side view of an aircraft tyre according to an example of the present invention mounted to an aircraft wheel hub of one of the main landing gears of the aircraft of Figure 1;
Figure 3 shows a schematic cross-sectional view of the aircraft tyre of Figure 2, at a first position in a revolution of the aircraft tyre;
Figure 4 shows a schematic cross-sectional view of the aircraft tyre of Figure 2, at a second position in the revolution of the aircraft tyre;
Figure 5 shows a schematic side view of an aircraft tyre according to a further example of the present invention mounted to an aircraft wheel hub;
Figure 6 shows a schematic cross-sectional view of the aircraft tyre of Figure 5, at a first position in a revolution of the aircraft tyre; and
Figure 7 shows a schematic cross-sectional view of the aircraft tyre of Figure 5, at a second position in the revolution of the aircraft tyre.

### DETAILED DESCRIPTION

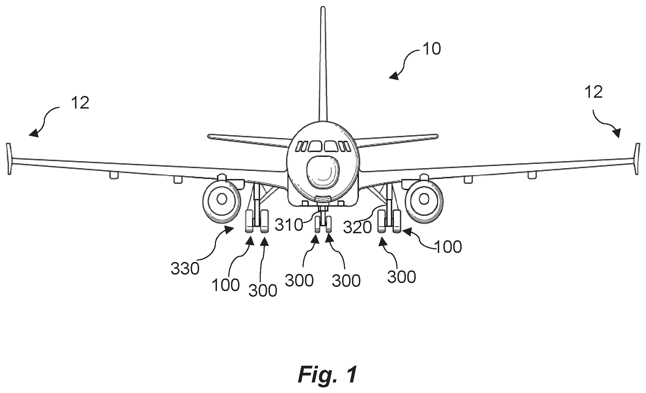

An aircraft 10 according to an example of the present invention is shown in Figure 1. The aircraft 10 has a nose landing gear 310 and a pair of main landing gears 320, 330. The nose landing gear 310 has a pair of wheels, each of which has a conventional aircraft tyre 300 mounted thereon. Each of the main landing gears 320, 330 has one each of a conventional tyre 300 and an aircraft tyre 100 according to an example of the present invention. The conventional tyres 300 are inboard and therefore located closer to the nose landing gear 310 while the aircraft tyres 100 according to examples of the present invention are outboard and therefore located further away from the nose landing gear 310, nearer to respective wing tips 12 of the aircraft 10.

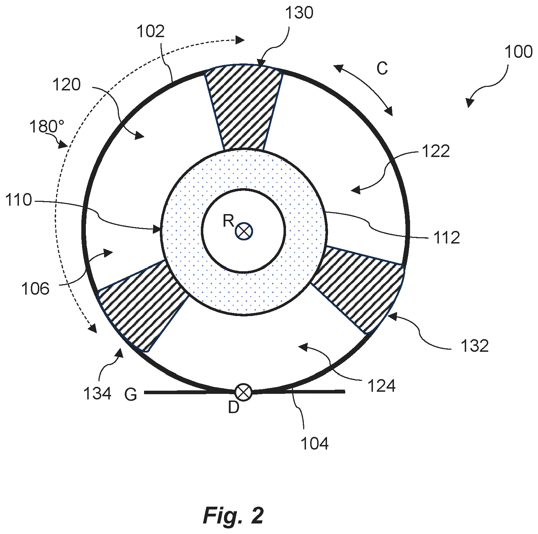

Figure 2 shows a schematic side view of one of the aircraft tyres 100 according to an example of the present invention. The aircraft tyre 100 is shown mounted to a rim 110 of a wheel hub 112 of the main landing gear 320. The aircraft tyre 100 has a rotation axis R, about which the aircraft tyre 100 is configured to rotate when an aircraft comprising the aircraft tyre 100 is in motion on the ground, such as during taxiing.

The aircraft tyre 100 has an external wall 102. The external wall 102 has a tread portion 104, which is in contact with the ground when the aircraft is on the ground G, and a side portion 106, which is not in contact with the ground G when the aircraft is on the ground G. The tread portion 104 is located opposite the rim 112, and has a tread to provide traction with the ground G as the aircraft tyre 100 rolls along the ground G. The tread portion 104 extends along a circumference of the aircraft tyre 100, and can also be referred to as a circumferential surface, in examples. The side portion 106 connects the tread portion 104 to the rim 112, and forms the side of a body of the aircraft tyre 100, thereby enclosing an inner portion of the aircraft tyre 100 such that the aircraft tyre 100 may be filled with pressurised gas.

The external wall 102 comprises a plurality of areas, spaced around the aircraft tyre 100 in a circumferential direction C, defined about the rotation axis R, along the tread portion 104. The plurality of areas are the following: a first low friction area 130, a second low friction area 132, a third low friction area 134, a first high friction area 120, a second high friction area 122 and a third high friction area 124. The respective low friction areas 130, 132, 134 are evenly spaced in the circumferential direction C, separated from each other by about 120 degrees. The respective low friction areas 130, 132, 134 are separated from one another by the respective high friction areas 120, 122, 124, in the circumferential direction C, like so: the first high friction area 120, the first low friction area 130, the second high friction area 122, the second low friction area 132, the third high friction area 124, and the third low friction area 134. The third low friction area 134 borders the first high friction area 120. Therefore, as the aircraft tyre 100 rolls along on the ground G, the respective high and low friction areas 120, 122, 124 and 130, 132, 134 sequentially and alternately contact the ground G.

The low friction areas 130, 132, 134 extend across both the tread portion 104 and the side portion 106 of the external wall 102. In this example, the respective low friction areas 130, 132, 134 together constitute about 20% of an overall surface area of the external wall 102, and of each of the tread portion 104 and the side portion 106.

The respective low friction areas 130, 132, 134 are made from a first material that has a coefficient of friction µ_{low}, with respect to the material of the ground G. The coefficient of friction µ_{low} is defined in a direction D, parallel to the rotation axis R, shown as an out-of-the-page vector in Figure 2. The high friction areas 120, 122, 124 are made from a second material has a coefficient of friction µ_{high} with respect to the material of the ground G. The coefficient of friction µ_{high} is defined in the direction D, parallel to the rotation axis R, shown as an out-of-the-page vector in Figure 2. The first material and the second material are rubber compound materials. The coefficient of friction µ_{low} is lower than the coefficient of friction µ_{high}. The material of ground G is here a conventional airport surface, such as asphalt or concrete. An airport surface may be characterised, for example, by a Pavement Classification Rating (PCR) in accordance with the standards set by the International Civil Aviation Organisation, in combination with an Aircraft Classification Rating (ACR). The PCR represents the ACR of the most damaging aircraft that can use a pavement on a regular basis, wherein regular is defined by an operator. In this example, the ground G is asphalt with a PCR of 1020 R/A/W/T (as has runway 09L/27R at Heathrow airport), but in other examples the ground G may have a different PCR, such as 820 R/A/W/T (such as runway 09R/27L at Heathrow airport).

A coefficient of friction µ is definable between two materials as a ratio of (a) the force of friction generated when a normal force is applied to the two materials to (b) the normal force. Therefore, the coefficient of friction µ_{high} being higher than the coefficient of friction µ_{low} means that the same normal force (here the normal force is the weight of the aircraft) generates a higher frictional force between the ground G and the tread portion 104 in the high friction areas 120, 122, 124, making them 'grippier' than the low friction areas 130, 132, 134.

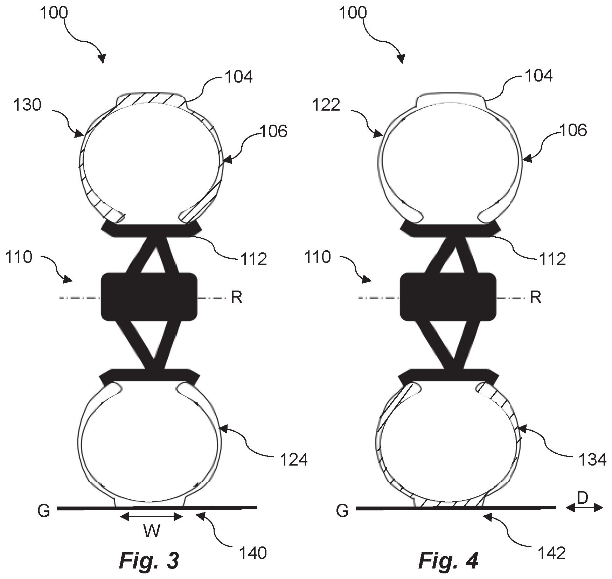

The aircraft tyre 100 is shown in alternative views in Figures 3 and 4. In Figure 3, the aircraft tyre 100 is shown in a cross-section along a plane containing the rotation axis R. The aircraft tyre 100 is shown at a point in its revolution about axis R, and resting on the ground G. At this first point in the revolution of the aircraft tyre 100, a ground contact patch 140 is identified as a portion of the tread portion 104 that is presently in contact with the ground G. Interaction between the ground G and the aircraft tyre 100 is a function of physical properties of the contact patch 140, such as a friction coefficient of the material of the contact patch 140 (with respect to the ground) and the size of the contact patch 140, and a normal load from the weight of a rest of the aircraft and forces from manoeuvring said weight. The contact patch 140, at the point in the revolution shown in Figure 3, is located in the third high friction area 124 of the aircraft tyre 100, and has a width W in a direction of the rotation axis R and a length (extending into the page in Figure 3, perpendicular to the width W). Also visible in this Figure is the first low friction area 130, located at a top of the aircraft tyre 100 with respect to the ground G. As the contact patch 140 is in one of the high friction areas 120, 122, 124, the friction coefficient between the aircraft tyre 100 and the ground G is µ_{high}, and the friction force experienced by the contact patch 140 is therefore also high. Therefore, the aircraft tyre 100 is inhibited from sliding along the ground G and the aircraft tyre 100 experiences torsional (rotational) load about an upwardly oriented axis from the ground G. The torsional load extends through the aircraft tyre 100 and the wheel hub 112 further on to a remainder of the main landing gear 320 when the direction of travel of the aircraft along the ground G changes.

In Figure 4, the aircraft tyre 100 is at a second, different point in its revolution about the rotation axis R, wherein a second contact patch 142 is now present in the third low friction area 134. The second high friction area 122 is located opposite the ground G at the top of the aircraft tyre 100 at this second point in its revolution. Thereby, the second contact patch 142 has a lower friction coefficient µ_{low} with respect to the ground G than the contact patch 140 had at the first point in the aircraft tyre 100 revolution. The aircraft tyre 100 is therefore allowed to slip in the direction D, parallel to the rotation axis R, along the ground G. Such slipping, or 'ungripping' from the ground, releases a build-up of tension (i.e. the torsional load) introduced to the aircraft tyre 100 at the first point in the revolution shown in Figure 3, or other points in the revolution where one of the high friction areas 120, 122, 124 are comprised in the contact patch.

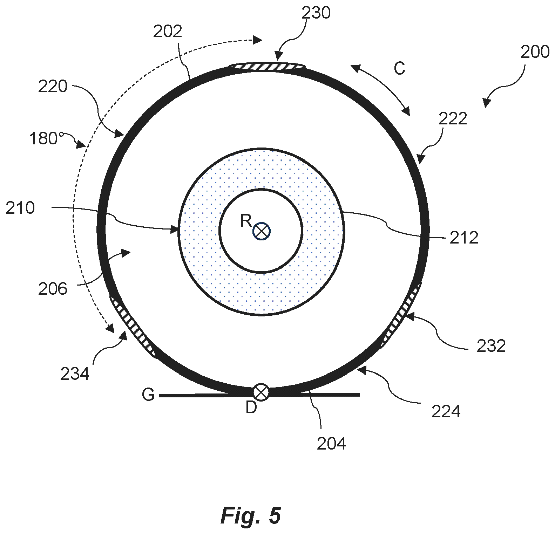

Figure 5 shows a schematic side view of an aircraft tyre 200 according to a second example of the present invention. Parts of the second embodiment corresponding to those of the first embodiment have the same reference numerals but increased by 100.

The tread portion 204 comprises a plurality of areas, spaced around the aircraft tyre 200 in a circumferential direction C, defined about a rotation axis R. The plurality of areas are the following: a first low friction area 230, a second low friction area 232, a third low friction area 234, a first high friction area 220, a second high friction area 222 and a third high friction area 224. The respective low friction areas 230, 232, 234 are evenly spaced in the circumferential direction C, separated from each other by about 120 degrees. The respective low friction areas 230, 232, 234 are separated from one another by the respective high friction areas 220, 222, 224, in the circumferential direction C, like so: the first high friction area 220, the first low friction area 230, the second high friction area 222, the second low friction area 232, the third high friction area 224, and the third low friction area 234. The third low friction area 234 borders the first high friction area 220. Therefore, as the aircraft tyre 200 rolls along on the ground G, the respective high and low friction areas 220, 222, 224 and 230, 232, 234 sequentially and alternately contact the ground.

The low friction areas extend across the tread portion 204 while the side portion 206 of the external wall 202 is of the same material as the high friction areas 220, 222, 224. In this example, the respective low friction areas 230, 232, 234 together constitute about 20% of an overall surface area of the tread portion 204.

The respective low friction areas 230, 232, 234 are made from a first material that has a coefficient of friction µ_{low}, with respect to the material of the ground G. The coefficient of friction µ_{low} is defined in a direction D, parallel to the rotation axis R, shown as an out-of-the-page vector in Figure 5. The respective high friction areas 220, 222, 224 are made from a second material which has a coefficient of friction µ_{high} with respect to the material of the ground G. The coefficient of friction µ_{high} is defined in a direction D, parallel to the rotation axis R, shown as an out-of-the-page vector in Figure 5. The first material and the second material are rubber compound materials. The coefficient of friction µ_{low} is lower than a coefficient of friction µ_{high}. The ground is here defined as a conventional airport surface. A side portion 206 of the aircraft tyre 200 is also made from the second material, and is connected to the respective high friction areas 220, 222, 224. Therefore the side portion 206 and the respective high friction areas 220, 222, 224 form a continuous surface of the second material, having a coefficient of friction µ_{high}.

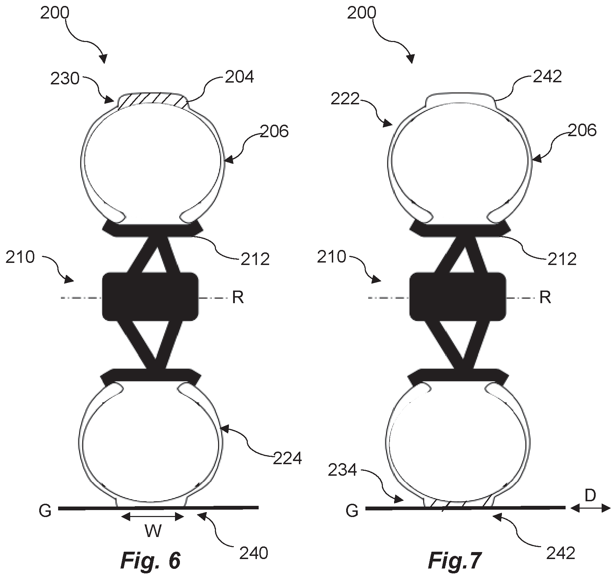

The aircraft tyre 200 is shown in alternative views in Figures 6 and 7. In Figure 6, the aircraft tyre 200 is shown in a cross-section along a plane containing the rotation axis R, at a point in its revolution about axis R, and resting on the ground G, similarly to Figure 3 for the aircraft tyre 100. At this first point in the revolution of the aircraft tyre 200, a ground contact patch 240 is identified as a portion of the tread portion 204 that is presently in contact with the ground G. The contact patch 240, at the point in the revolution shown in Figure 6, is located in the third high friction area 224 of the aircraft tyre 200, and has a width W in a direction of the rotation axis R and a length (extending into the page in Figure 6, perpendicular to the width W). As the contact patch 240 is in one of the high friction areas 220, 222, 224, the friction coefficient between the aircraft tyre 200 and the ground G is µ_{high}, and the friction force experienced by contact patch 240 is also high. Therefore, the aircraft tyre is inhibited from sliding along the ground G and the aircraft tyre 200 experiences torsional (rotational) load about an upwardly oriented axis from the ground G. The torsional load extends through the aircraft tyre 200 and the wheel hub 212 further on to a remainder of an aircraft landing gear (not shown) the aircraft tyre 200 is a part of when the direction of travel of the aircraft along the ground changes.

In Figure 7, the aircraft tyre 200 is at a second, different point in its revolution about the rotation axis R, wherein a second contact patch 242 is now present in the third low friction area 234, similarly to the aircraft tyre 100 in Figure 4. Thereby, the second contact patch 242 has a lower friction coefficient µ_{low} with respect to the ground G than the contact patch 240 had at the first point in the aircraft tyre 200 revolution. The aircraft tyre 200 is therefore allowed to slip in the direction D, parallel to the rotation axis R, along the ground G. Such slipping, or 'ungripping' from the ground, releases a build-up of tension (i.e. the torsional load) introduced to the aircraft tyre 200 at the first point in the revolution shown in Figure 6, or other points in the revolution where one of the high friction areas 220, 222, 224 are comprised in the contact patch.

In alternative examples of aircraft tyres according to the present invention, there are more than or fewer than three low friction areas of the tread portion, i.e., the circumferential surface. For example, there may be one area, two areas spaced at 180 degrees relative to one another, or four areas located at 90 degrees to each other, five areas located at 72 degrees to each other, and so on. In alternative examples, the low friction areas may not be evenly spaced about the circumference of the aircraft tyre. In alternative examples, the low friction areas comprise the same material as the high fiction areas, and the low friction is achieved by surface modification such as modification of tread shape and/or depth, or by modification of an internal structure of the aircraft tyre.

In alternative examples, the low friction area or areas are formed such that the contact patch is at no point solely formed from the low friction area. That is, at all points one of the high friction areas overlaps the contact patch to a certain degree, in the width direction and/or the length direction of the contact patch. In alternative examples, the respective low friction areas may constitute from about 5% to about 50% of the tread portion of the aircraft tyre, for example 10%, 30% or 40%.

In alternative examples, the coefficient of friction µ may be measured in a direction that is non-parallel to the rotation axis, such as at 30° or 45° to the direction of the rotation axis and along the ground, but in all examples the direction in which the coefficient of friction µ is measured nevertheless has at least a component that is parallel to the rotation axis.

In other example aircraft, all of the wheels may have tyres according to the present invention, and/or the aircraft may have a different configuration of wheels and landing gears. For example, in other examples, the tyres according to the present invention may be in use in the nose landing gear. In other examples, all of the aircraft tyres of the aircraft are different from one another, in terms of their respective low friction area proportions, distribution and/or material the low friction areas are made from. In some examples, of the aircraft tyres on the main landing gears, outboard aircraft tyres, located closer to the wing tips, have a higher proportion of low friction areas than inboard aircraft tyres, located nearer to the nose landing gear, as the outer aircraft tyres experience greater torsional load than inner aircraft tyres. In some examples, the aircraft may comprise more than two aircraft tyres per landing gear, such as a front pair located closer to a nose of the aircraft and a rear pair located further away from the nose of the aircraft. In such configurations, the front pair and the rear pair may or may not have the same configuration of the low friction areas. Further pairs of aircraft tyres on each landing gear are possible, with yet different configurations of low friction areas.

It is to be noted that the term "or" as used herein is to be interpreted to mean "and/or", unless expressly stated otherwise.

## Claims

1. An aircraft tyre comprising a circumferential surface, wherein the circumferential surface is centred on a rotation axis, is configured to roll along the ground in use about the rotation axis, and comprises at least one first area and at least one second area circumferentially offset from the at least one first area, the at least one first area and the at least one second area having different respective friction coefficients, measured in respective parallel directions that each have at least a component parallel to the rotation axis, with respect to a material of the ground.

2. The aircraft tyre according to claim 1, wherein the at least one first area and the at least one second area of the circumferential surface comprise respective different material compounds.

3. The aircraft tyre according to claim 1 or claim 2, wherein the at least one first area comprises plural first areas and the at least one second area comprises plural second areas, and wherein the plural first areas and the plural second areas alternate along the circumferential surface.

4. The aircraft tyre according to claim 3, wherein the plural first areas are equally sized and the plural second areas are equally sized.

5. The aircraft tyre according to claim 3 or claim 4, wherein a size of each of the plural first areas is greater than a size of each of the plural second areas.

6. The aircraft tyre according to any one of claims 1 to 5, wherein the friction coefficient of the at least one first area is greater than the friction coefficient of the at least one second area.

7. The aircraft tyre according to claim 6, wherein the at least one first area forms at least 50% of a surface area of the circumferential surface.

8. The aircraft tyre according to any one of claims 1 to 7, the aircraft tyre having a contact patch in contact with the ground when resting on the ground under a load of 25,000kg normal to the ground, the contact patch moving along the circumferential surface as the aircraft tyre revolves about the rotation axis when rolling on the ground, the contact patch having a width in a direction of the rotation axis, wherein the, or each of the, at least one second area of the circumferential surface extends in the direction of the rotation axis such that, in use, the, or each of the, at least one second area extends across an entirety of the width of the contact patch when comprised in the contact patch.

9. The aircraft tyre according to any one of claims 1 to 8, the aircraft tyre having a contact area in contact with the ground when resting on the ground and under a load of 25,000kg normal to the ground, the contact area moving along the circumferential surface as the aircraft tyre revolves about the rotation axis when rolling on the ground, the contact area having a length in a direction perpendicular to a direction of the rotation axis, wherein the, or each of the, at least one second area of the circumferential surface extends in a circumferential direction such that, in use, the, or each of the, at least one second area extends along an entirety of the length of the contact area when comprised in the contact area.

10. An aircraft landing gear comprising the aircraft tyre according to any one of claims 1 to 9.

11. The aircraft landing gear according to claim 10, wherein the aircraft landing gear comprises a plurality of aircraft tyres, wherein at least one but less than all of the plurality of aircraft tyres is according to any one of claims 1 to 9.

12. The aircraft landing gear according to claim 10, wherein the aircraft landing gear comprises a plurality of aircraft tyres, and wherein each of at least two of the plurality of aircraft tyres is according to any one of the claims 1 to 9, and the at least one second area of a first of the at least two aircraft tyres is different in size and/or the at least one second area of the first of the at least two aircraft tyres has the friction coefficient, measured in the parallel direction that has at least a component parallel to the rotation axis, with respect to the material of the ground, that is different to the friction coefficient, measured in the parallel direction that has at least a component parallel to the rotation axis, with respect to the material of the ground of the at least one second area of a second of the at least two aircraft tyres.

13. An aircraft comprising the landing gear of any one of claims 10 to 12.
